# EUROPEAN PATENT APPLICATION

(11) **EP 3 246 584 A1**
(43) Date of publication of application: **22.11.2017**
(21) Application number: 16170200.6
(22) Date of filing: 18.05.2016
(51) Int. Cl.: F16C 33/58, F16C 33/64, F16C 19/06, F16C 19/16, F16C 29/06, F16C 19/08, F16C 19/18

(54) **A BALL BEARING AND A METHOD OF FINISHING A GROOVED RACEWAY**

(71) Applicant: Gereedschapswerktuigenindustrie Hembrug B.V., 2031 BJ Haarlem (NL)
(72) Inventor: DE VEER, Bert, 2022 GC Haarlem (NL)
(74) Representative: De Vries & Metman

(57) **Abstract**

A ball bearing (1) comprises balls (2) and opposite casings (3, 5) including grooved raceways (4, 6) within which the balls (2) are accommodated. Each of the grooved raceways (4, 6) has opposite side walls and each side wall has at least a supporting surface (7) which contacts the balls (2). The supporting surfaces (7) are parallel to each other and have widths which are each smaller than 10% of the circumference of one of the balls (2). At least one of the supporting surfaces (7) extends on top of a projection from a basic surface (8) of at least one of the raceways (4, 6), which basic surface (8) is adjacent to said projection.

## Description

The present invention relates to a ball bearing, comprising balls and opposite casings including grooved raceways within which the balls are accommodated, wherein each of the grooved raceways has opposite side walls and each side wall has at least a supporting surface which contacts the balls, which supporting surfaces are parallel to each other and have widths which are each smaller than 10% of the circumference of one of the balls.

Such a ball bearing is widely known in the prior art and can be used for high-precision applications. For example, four-point contact bearings have ball-raceway contact at four points and one bearing can support bidirectional radial, axial and moment loads. Four-point contact bearings may have gothic arch grooves at the inner and outer raceways that enable the balls to make two points of contact on each of the inner and outer races. A specific ball bearing is a ball bushing bearing or (recirculating) ball screw nut which uses recirculating balls that roll on round shafts and are constrained by grooved raceways in the bushing that surrounds the shaft. They allow for rotational alignment.

An object of the invention is to provide a low-cost ball bearing.

This object is accomplished with the ball bearing according to the invention, which is characterized in that at least one of the supporting surfaces extends on top of a projection from a basic surface of at least one of the raceways, which basic surface is adjacent to said projection.

Due to the invention it is only the supporting surface which requires high-precision machining whereas the adjacent basic surface may have a less accurate surface structure. In practice, this allows to create the basic surface relatively quickly, whereas more time can be spent for manufacturing the supporting surface. It is noted that due to the parallel arrangement of the supporting surfaces, they are located at a distance from each other.

The supporting surface may project more than 20 µm from the basic surface and preferably more than 30 µm.

The basic surface may have a partly circular cross section. It is clear that in that case the radius of the basic surface is larger than the radius of each of the balls such that the basic surface does not contact the balls.

In a specific embodiment both opposite side walls are each provided with at least a projection from the basic surface, wherein the supporting surfaces extend on top of the respective projections. The raceway may be mirror symmetrical with respect to a central plane which extends along the raceway through the centres of the balls. More specifically, the central plane can intersect the lowest point of the raceway.

In a preferred embodiment the surface roughness of the supporting surface is lower than the surface roughness of the basic surface since this provides the opportunity to manufacture the basic surface less accurately, but more quickly.

The bearing may be a rotary bearing wherein the raceways are formed by an inner and outer raceway.

Alternatively, the ball bearing is a ball bushing bearing including a shaft and a bushing, which are provided with the respective raceways between which the balls are constrained, wherein the ball bushing bearing is configured such that the balls recirculate upon rotating the shaft and bushing with respect to each other. A ball bushing bearing is also known as a recirculating ball screw nut.

The invention is also related to a method of finishing a grooved raceway in a casing of a ball bearing as described above, comprising the steps of
- supplying a casing including a grooved raceway which has a partly circular cross-section,
- machining the raceway by means of a first cutting run, wherein material is removed from the casing to a greater depth at a distance from the intended location of the projection than at the intended location of the projection,
- subsequently machining only a part of the resulting raceway by means of a successive cutting run wherein at least at the intended projection material is removed.

Due to the difference in depth of removing material during the first cutting run a contour of a projection at the raceway is created. During the successive cutting run material of only a part of the raceway is removed, but at least at the intended projection. This provides the opportunity to apply a finishing step which results in a very accurate supporting surface and which takes relatively much time, but wherein the total time of manufacturing is minimized since it is only a part of the raceway where the successive cutting run is performed.

The successive cutting run may be performed with a finer machining tool than the previous cutting run.

The cutting depth during the successive cutting run may be smaller than during the previous cutting run.

The successive cutting run can be repeated at least once in order to create a still more accurate final supporting surface.

The invention will hereafter be elucidated with reference to very schematic drawings showing embodiments of the invention by way of example.
Fig. 1 is a cross-sectional view of a part of a ball bearing according to the invention.
Figs. 2-4 are similar views as Fig. 1, but illustrating an embodiment of a method of finishing a grooved raceway according to the invention

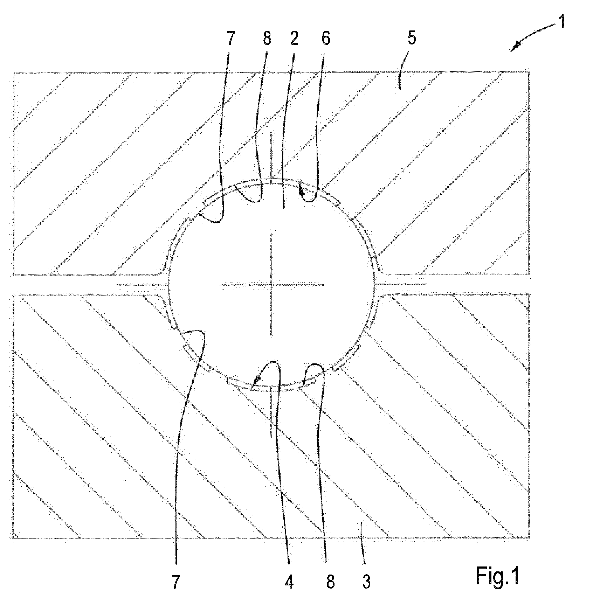

Fig. 1 shows a part of an embodiment of a ball bearing 1, which comprises balls 2, an inner casing 3 having an inner grooved raceway 4 and an outer casing 5 having an outer grooved raceway 6. The inner and outer grooved raceways 4, 6 face each other and the balls 2 are accommodated within the grooved raceways 4, 6. In the embodiment as shown in Fig. 1 the ball bearing 1 is a rotary bearing, in which the balls 2 are constrained between the inner raceway 4 and the outer raceway 6 and in which a cage (not shown) keeps the balls 2 spaced apart. The cage serves to prevent the balls 2 from rubbing against each other which would result in skidding. Alternatively, the ball bearing 1 may be used for other applications than a rotary bearing, for example a ball bushing bearing (i.e. a recirculating ball screw for nuts and spindles) or a linear motion bearing.

Each of the grooved raceways 4, 6 has a U-shaped cross-section including opposite side walls at both sides of a central plane which extends through the centres of the balls 2 and intersects the raceways 4, 6 at their lowest points. In Fig. 1 the central plane is vertical.

Furthermore, each of the opposite side walls of each of the raceways 4, 6 has at least a supporting surface 7 which contacts the balls 2. The embodiment as shown in Fig. 1 is a six-point contact bearing: each ball 2 contacts four separate supporting surfaces 7 at the inner raceway 4 and two separate supporting surfaces 7 at the outer raceway 6. Numerous alternative embodiments are conceivable, for example four separate supporting surfaces 7 at the outer raceway 6 and two separate supporting surfaces 7 at the inner raceway 4, or different numbers of separate supporting surfaces 7.

The supporting surfaces 7 are parallel to each other and under operating conditions the balls 2 run thereon. Each of the supporting surfaces 7 has a certain width which is larger than a mathematical line contact, but smaller than 10% of the circumference of one ball 2, for example 2-5% thereof. The supporting surfaces 7 of each raceway 4, 6 extend on tops of respective projections from a basic surface 8 of the raceways 4, 6. The basic surface 8 is adjacent to the projections in this case at either side of the respective supporting surfaces 7. The balls 2 are free from the basic surface 8. In practice the supporting surfaces 7 may extend more than 30 µm above the basic surface 8.

The basic surface 8 forms a partly circular cross section as shown in Fig. 1. The radius of the circular portion of the basic surface 8 is larger than the radius of one ball 2. The supporting surfaces 7 lie on a virtual circle which can be slightly larger than the circumference of one ball 2. In the embodiment as shown in Fig. 1 the inner raceway 4 is mirror symmetrical with respect to the central plane through the centres of the balls 2, but this may be different in an alternative embodiment. Furthermore, the outer raceway 6 is mirror symmetrical with respect to the central plane through the centres of the balls 2.

Since the basic surfaces 8 of the inner and outer raceways 4, 5 do not contact the balls 2 under operating conditions they can be machined at a rougher tolerance than the supporting surfaces 7. Since only the relatively narrow supporting surfaces 7 need to be machined accurately the manufacturing process can be performed relatively quickly.

In an alternative embodiment (not shown) the ratio between the total surfaces of the supporting surfaces 7 and the basic surfaces 8 as seen in cross-section may be different from the ratio in the embodiment as shown in Fig. 1. In general, the ratio will increase with increasing load performance, for example higher than 50% or even higher than 80%.

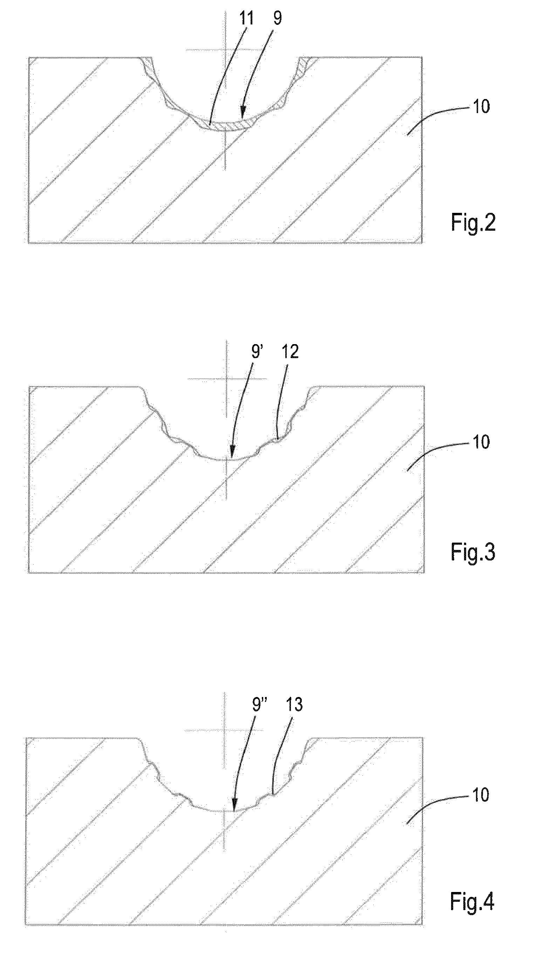

Figs. 2-4 illustrate successive steps of an embodiment of a method of finishing a grooved raceway 9 in a casing 10 of a ball bearing according to the present invention. For example, the raceways 4, 6 including the projections having the supporting surfaces 7, as shown in Fig. 1 and described above, can be manufactured through this method. Fig. 2 shows the casing 10 at the beginning of the process of finishing. At his stage the raceway 9 comprises a U-shaped groove including a partly circular cross-section. Starting from that shape the raceway 9 is machined by means of a first cutting run, wherein material is removed from the casing 10 to a greater depth at a distance from the locations where the projections are intended than at the locations where the projections are intended. Fig. 2 shows a cutting region 11, which illustrates four shallow areas where four projections are intended. Fig. 3 shows the resulting shape of the raceway 9' after the first cutting run.

Fig. 3 shows a successive cutting region 12 which is removed during a successive cutting run. During this cutting run only a part of the resulting raceway 9' is removed. Nevertheless, at least at the intended projections material is removed. Besides, the successive cutting region 12 has a smaller depth than the previous cutting region 11. Fig. 4 shows the resulting shape of the raceway 9" after the successive cutting run.

Fig. 4 also shows a final cutting region 13 which is removed during a final cutting run. Also during this cutting run material is removed at only a part of the resulting raceway 9", again at least at the intended projections. The final cutting region 13 has a smaller depth than the previous cutting region 12.

The successive cutting runs are performed with machining tools having increasingly fineness. It is also possible to perform the successive cutting runs with the same machining tools but operated at increasingly lower cutting speed and/or feed. Since the region of machining decreases after each cutting run, the total manufacturing time may still be minimized. The machining tools may comprise milling tools, grinding tools, hard turning tools or the like.

From the foregoing, it will be clear that the invention provides a ball bearing which can be manufactured at relatively low cost.

The invention is not limited to the embodiment shown in the drawings and described hereinbefore, which may be varied in different manners within the scope of the claims and their technical equivalents. For example, the inner raceway and the outer raceway may be not symmetrical.

## Claims

1. A ball bearing (1), comprising balls (2) and opposite casings (3, 5) including grooved raceways (4, 6) within which the balls (2) are accommodated, wherein each of the grooved raceways (4, 6) has opposite side walls and each side wall has at least a supporting surface (7) which contacts the balls (2), which supporting surfaces (7) are parallel to each other and have widths which are each smaller than 10% of the circumference of one of the balls (2), **characterized in that** at least one of the supporting surfaces (7) extends on top of a projection from a basic surface (8) of at least one of the raceways (4, 6), which basic surface (8) is adjacent to said projection.

2. A ball bearing (1) according to claim 1, wherein the supporting surface (7) projects more than 20 µm above the basic surface (8) and preferably more than 30 µm.

3. A ball bearing (1) according to claim 1 or 2, wherein the basic surface (8) has a partly circular cross section.

4. A ball bearing (1) according to one of the preceding claims, wherein both opposite side walls are each provided with at least a projection from the basic surface (8), wherein the supporting surfaces (7) extend on top of the respective projections.

5. A ball bearing (1) according to one of the preceding claims, wherein said raceway (4, 6) is mirror symmetrical with respect to a centre plane which extends along the raceway (4, 6) through the centres of the balls (2).

6. A ball bearing (1) according to one of the preceding claims, wherein the surface roughness of the supporting surface (7) is lower than the surface roughness of the basic surface (8).

7. A ball bearing (1) according to one of the preceding claims, wherein the bearing (1) is a rotary bearing wherein the raceways (4, 6) are formed by an inner and outer raceway.

8. A ball bearing according to one of the claims 1-6, wherein the ball bearing is a ball bushing bearing including a shaft and a bushing, which are provided with the respective raceways between which the balls are constrained, wherein the ball bushing bearing is configured such that the balls recirculate upon rotating the shaft and bushing with respect to each other.

9. A method of finishing a grooved raceway (9) in a casing (10) of a ball bearing according to one of the preceding claims, comprising the steps of
- supplying a casing (10) including a grooved raceway (9) which has a partly circular cross-section,
- machining the raceway (9) by means of a first cutting run, wherein material is removed from the casing (10) to a greater depth at a distance from the intended location of the projection than at the intended location of the projection,
- subsequently machining only a part of the resulting raceway (9') by means of a successive cutting run wherein at least at the intended projection material is removed.

10. A method according to claim 9, wherein the successive cutting run is performed with a finer machining tool than the previous cutting run.

11. A method according to claim 9 or 10, wherein the cutting depth during the successive cutting run is smaller than during the previous cutting run.

12. A method according to one of the claims 9-11, wherein the successive cutting run is repeated at least once.
